# EUROPEAN PATENT APPLICATION

(11) **EP 3 046 016 A1**
(43) Date of publication of application: **20.07.2016**
(21) Application number: 16150084.8
(22) Date of filing: 04.01.2016
(51) Int. Cl.: G06F 3/0488, G06F 3/0484

(54) **METHOD AND APPARATUS FOR SWITCHING DISPLAY MODE**

(30) Priority: 15.01.2015 CN 201510019567
(71) Applicant: Xiaomi Inc., Beijing 100085 (CN)
(72) Inventor: ZHU, Cai, 100085 Haidian District (CN); WANG, Ying, 100085 Haidian District (CN); WANG, Bo, 100085 Haidian District (CN); XU, Fei, 100085 Haidian District (CN)
(74) Representative: Loustalan, Paul William

(57) **Abstract**

The present disclosure relates to a method and an apparatus for switching a display mode. The method is used in a mobile terminal at least having three buttons arranged in a display interface of the mobile terminal in such a manner that the three buttons are a first button, a second button and a third button from left to right, and the method includes: detecting and obtaining an event of successively triggering at least two buttons; obtaining a current display mode; switching the display mode of a screen according to a trigger manner of the event of successively triggering the at least two buttons and the current display mode, in which the display mode comprises a full screen mode, a leftward scaling mode and a rightward scaling mode.

## Description

### TECHNICAL FIELD

The present disclosure generally relates to the field of terminal technology, and more particularly, to a method and an apparatus for switching a display mode.

### BACKGROUND

With the popularization and developments of mobile terminals, a thin-frame touch technology has been widely used in the mobile terminals. Meanwhile, various mobile terminals having large screens have merged, such as the mobile terminals having sizes of 5.0 inches and 5.7 inches. A user finds that it is difficult to make an effective operation by holding the mobile terminal having the large screen via a single hand, while enjoying a high experience during using the mobile terminal having the larger screen.

In order to solve the operation problem of the user, it is generally required to switch a display mode of the mobile terminal generally from a full screen mode to a single-hand operation mode, in which the single-hand operation mode at least includes a leftward scaling mode or a rightward scaling mode. In a process of switching the full screen mode to the single-hand operation mode, a gyroscope installed in the mobile terminal may be used. When the user shakes the mobile terminal, the gyroscope detects a shake operation, and a current display mode is switched from the full screen mode to the single-hand operation mode under a trigger of the shake operation. In the process of switching the full screen mode to the single-hand operation mode, a mode setting page may be provided and at least a first option and a second option may be included in the mode setting page, in which the first option is configured to switch the full screen mode to the single-hand operation mode and the second option is configured to switch the single-hand operation mode to the full screen mode. When it is detected that the first option is selected, the terminal switches the current display mode from the full screen mode to the single-hand operation mode.

### SUMMARY OF THE INVENTION

In order to overcome problems existing in the related art, the present disclosure provides a method and an apparatus for switching a display mode.

According to a first aspect of embodiments of the present disclosure, there is provided a method for switching a display mode, the method is applied in a mobile terminal at least having three buttons arranged in a display interface of the mobile terminal in such a manner that the three buttons are a first button, a second button and a third button from left to right, and the method includes:
detecting and obtaining an event of successively triggering at least two buttons;
obtaining a current display mode;
switching the display mode of a screen according to a trigger manner of the event of successively triggering the at least two buttons, and the current display mode;
in which the display mode includes a full screen mode, a leftward scaling mode and a rightward scaling mode.

The step of detecting and obtaining the event of successively triggering at least two buttons may comprise detecting and receiving the event. The step of obtaining the current display mode may comprise determining the current display mode, or receiving the current display mode from memory. As used herein, the term "obtaining" may refer to "determining" and/or "receiving".

In another embodiment of the present disclosure, detecting and obtaining an event of successively triggering at least two buttons includes:
obtaining a monitor registered previously;
detecting and obtaining the event of successively triggering the at least two buttons based on the monitor.

In another embodiment of the present disclosure, detecting and obtaining the event of successively triggering the at least two buttons based on the monitor includes:
obtaining a first button parameter according to the monitor when it is detected that any button is triggered;
obtaining a button corresponding to the first button parameter according to a correspondence between button parameters and buttons;
starting a timer, when the button is the second button;
determining that the event of successively triggering the at least two buttons is obtained, if a second button parameter is obtained before a duration of the timer reaches a predetermined duration.

In another embodiment of the present disclosure, obtaining a first button parameter according to the monitor includes:
calling an onKeyEvent function in the timer, calling a keyEvent function and further calling a getKeyCode function when it is detected that any button is triggered;
obtaining the first button parameter according to the getKeyCode function.

In another embodiment of the present disclosure, obtaining a current display mode includes:
obtaining a current mode parameter;
obtaining the current display mode corresponding to the current mode parameter according to a correspondence between display modes and mode parameters.

In another embodiment of the present disclosure, obtaining the current display mode corresponding to the current mode parameter according to a correspondence between display modes and mode parameters includes:
obtaining the current display mode corresponding to a first parameter as the full screen mode according to the correspondence between display modes and mode parameters, when the mode parameter is the first parameter;
obtaining the current display mode corresponding to a second parameter as the leftward scaling mode according to the correspondence between display modes and mode parameters, when the mode parameter is the second parameter;
obtaining the current display mode corresponding to a third parameter as the rightward scaling mode according to the correspondence between display modes and mode parameters, when the mode parameter is the third parameter.

In another embodiment of the present disclosure, switching the display mode of a screen according to a trigger manner of the event of successively triggering the at least two buttons and the current display mode includes:
determining the trigger manner of the at least two buttons as a continuous tap mode according to the event of successively triggering the at least two buttons;
switching the display mode of the screen according to the continuous tap mode and the current display mode.

In another embodiment of the present disclosure, the continuous tap mode includes a continuous tap sliding to left and a continuous tap sliding to right;
determining the trigger manner of the at least two buttons as a continuous tap mode according to the event of successively triggering the at least two buttons includes:
determining the trigger manner of the at least two buttons as the continuous tap sliding to left, when triggered buttons comprise at least the first button and the second button and a sliding path of a touch operation on the at least two buttons is towards left;
determining the trigger manner of the at least two buttons as the continuous tap sliding to right, when the triggered buttons comprise at least the third button and the second button and the sliding path of the touch operation on the at least two buttons is towards right.

In another embodiment of the present disclosure, switching the display mode of the screen according to the continuous tap mode and the current display mode includes:
switching the full screen mode to the leftward scaling mode, when the continuous tap mode is the continuous tap sliding to left and the current display mode is the full screen mode;
switching the full screen mode to the rightward scaling mode, when the continuous tap mode is the continuous tap sliding to right and the current display mode is the full screen mode;
switching the leftward scaling mode to the full screen mode, when the continuous tap mode is the continuous tap sliding to left and the current display mode is the leftward scaling mode;
switching the leftward scaling mode to the rightward scaling mode or the full screen mode, when the continuous tap mode is the continuous tap sliding to right and the current display mode is the leftward scaling mode;
switching the rightward scaling mode to the leftward scaling mode or the full screen mode, when the continuous tap mode is the continuous tap sliding to left and the current display mode is the rightward scaling mode;
switching the rightward scaling mode to the full screen mode, when the continuous tap mode is the continuous tap sliding to right and the current display mode is the rightward scaling mode.

According to a second aspect of embodiments of the present disclosure, there is provided an apparatus for switching a display mode, the apparatus is used in a mobile terminal at least having three buttons arranged in a display interface of the mobile terminal in such a manner that the three buttons are a first button, a second button and a third button from left to right, and the apparatus includes:
a detecting and obtaining module configured to detect and obtain an event of successively triggering at least two buttons;
an obtaining module configured to obtain a current display mode;
a switching module configured to switch the display mode of a screen according to a trigger manner of the event of successively triggering the at least two buttons, and the current display mode;
in which the display mode includes a full screen mode, a leftward scaling mode and a rightward scaling mode.

In another embodiment of the present disclosure, the detecting and obtaining module includes:
an obtaining unit configured to obtain a monitor registered previously;
a detecting and obtaining unit configured to detect and obtain the event of successively triggering the at least two buttons based on the monitor.

In another embodiment of the present disclosure, the detecting and obtaining unit includes:
a first obtaining sub-unit configured to obtain a first button parameter according to the monitor when it is detected that any button is triggered;
a second obtaining sub-unit configured to obtain a button corresponding to the first button parameter according to a correspondence between button parameters and buttons;
a starting sub-unit configured to start a timer, when the button is the second button;
a determining sub-unit configured to determine that the event of successively triggering the at least two buttons is obtained, if a second button parameter is obtained before a duration of the timer reaches a predetermined duration.

In another embodiment of the present disclosure, the first obtaining sub-unit is configured to call an onKeyEvent function in the timer, call a keyEvent function and further call a getKeyCode function when it is detected that any button is triggered;
obtain the first button parameter according to the getKeyCode function.

In another embodiment of the present disclosure, the obtaining module is configured to obtain a current mode parameter;
obtain the current display mode corresponding to the current mode parameter according to a correspondence between display modes and mode parameters.

In another embodiment of the present disclosure, the obtaining module is configured to obtain the current display mode corresponding to a first parameter as the full screen mode according to the correspondence between display modes and mode parameters, when the mode parameter is the first parameter;
the obtaining module is configured to obtain the current display mode corresponding to a second parameter as the leftward scaling mode according to the correspondence between display modes and mode parameters, when the mode parameter is the second parameter;
the obtaining module is configured to obtain the current display mode corresponding to a third parameter as the rightward scaling mode according to the correspondence between display modes and mode parameters, when the mode parameter is the third parameter.

In another embodiment of the present disclosure, the switching module includes:
a determining unit configured to determine the trigger manner of the at least two buttons as a continuous tap mode according to the event of successively triggering the at least two buttons;
a switching unit configured to switch the display mode of the screen according to the continuous tap mode and the current display mode.

In another embodiment of the present disclosure, the continuous tap mode comprises a continuous tap sliding to left and a continuous tap sliding to right;
the determining unit is configured to determine the trigger manner of the at least two buttons as the continuous tap sliding to left, when triggered buttons comprise at least the first button and the second button and a sliding path of a touch operation on the at least two buttons is towards left;
the determining unit is configured to determine the trigger manner of the at least two buttons as the continuous tap sliding to right, when the triggered buttons comprise at least the third button and the second button and the sliding path of the touch operation on the at least two buttons is towards right.

In another embodiment of the present disclosure, the switching unit is configured to switch the full screen mode to the leftward scaling mode, when the continuous tap mode is the continuous tap sliding to left and the current display mode is the full screen mode;
the switching unit is configured to switch the full screen mode to the rightward scaling mode, when the continuous tap mode is the continuous tap sliding to right and the current display mode is the full screen mode;
the switching unit is configured to switch the leftward scaling mode to the full screen mode, when the continuous tap mode is the continuous tap sliding to left and the current display mode is the leftward scaling mode;
the switching unit is configured to switch the leftward scaling mode to the rightward scaling mode or the full screen mode, when the continuous tap mode is the continuous tap sliding to right and the current display mode is the leftward scaling mode;
the switching unit is configured to switch the rightward scaling mode to the leftward scaling mode or the full screen mode, when the continuous tap mode is the continuous tap sliding to left and the current display mode is the rightward scaling mode;
the switching unit is configured to switch the rightward scaling mode to the full screen mode, when the continuous tap mode is the continuous tap sliding to right and the current display mode is the rightward scaling mode.

According to a third aspect of embodiments of the present disclosure, there is provided an apparatus for switching a display mode, the apparatus is used in a mobile terminal at least having three buttons arranged in a display interface of the mobile terminal in such a manner that the three buttons are a first button, a second button and a third button from left to right, and the apparatus includes:
a processor;
a memory configured to store instructions executable by the processor;
in which the processor is configured to:
   detect and obtain an event of successively triggering at least two buttons;
   obtain a current display mode;
   switch the display mode of a screen according to a trigger manner of the event of successively triggering the at least two buttons, and the current display mode;
   in which the display mode comprises a full screen mode, a leftward scaling mode and a rightward scaling mode.

According to a further aspect of embodiments of the present disclosure, there is provided a computer program which when executed on a mobile terminal causes it to carry out the method substantially as herein described.

Technical solutions provided by embodiments of the present disclosure may have following beneficial effects.

After the event of successively triggering the at least two buttons is detected, the display mode of the screen is switched according to the trigger manner of the event of successively triggering the at least two buttons and the current display mode. Since the display mode is switched according to different trigger manners of the terminal's own buttons and the current display mode, an operation complexity is reduced, a problem of switching between different display modes is solved, and it is suitable for handedness of different users.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for switching a display mode according to an exemplary embodiment.
Fig. 2 is a flow chart showing a method for switching a display mode according to an exemplary embodiment.
Fig. 3 is a schematic diagram illustrating a screen display according to an exemplary embodiment.
Fig. 4 is a schematic diagram illustrating a screen display according to an exemplary embodiment.
Fig. 5 is a schematic diagram illustrating a screen display according to an exemplary embodiment.
Fig. 6 is a schematic diagram illustrating a screen display according to an exemplary embodiment.
Fig. 7 is a schematic diagram illustrating a screen display according to an exemplary embodiment.
Fig. 8 is a schematic diagram illustrating a screen display according to an exemplary embodiment.
Fig. 9 is a schematic diagram illustrating a screen display according to an exemplary embodiment.
Fig. 10 is a schematic diagram illustrating a screen display according to an exemplary embodiment.
Fig. 11 is a schematic diagram illustrating a screen display according to an exemplary embodiment.
Fig. 12 is a schematic diagram illustrating a screen display according to an exemplary embodiment.
Fig. 13 is a schematic diagram illustrating a screen display according to an exemplary embodiment.
Fig. 14 is a block diagram illustrating an apparatus for switching a display mode according to an exemplary embodiment.
Fig. 15 is a schematic diagram of an apparatus for switching a display mode according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

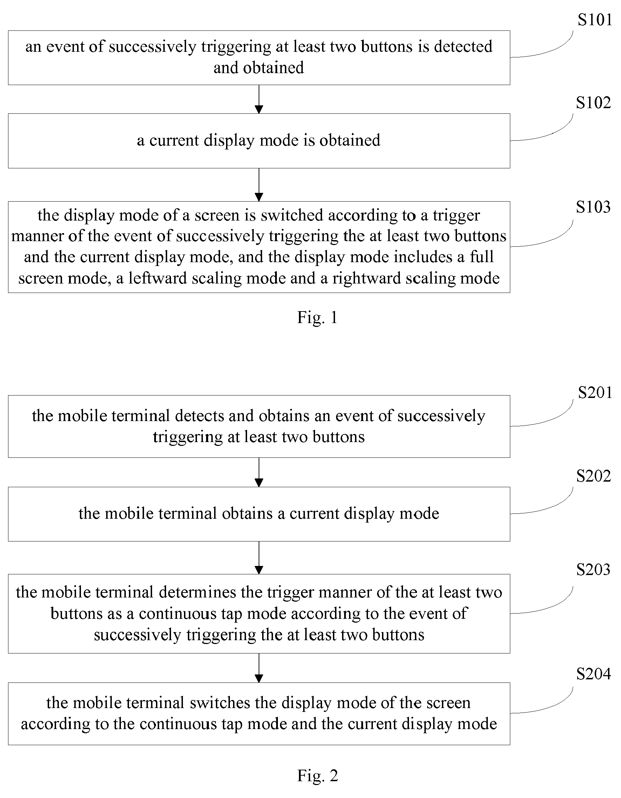

Fig. 1 is a flow chart of a method for switching a display mode according to an exemplary embodiment. Referring to Fig. 1, the method is used in a mobile terminal at least having three buttons arranged in a display interface of the mobile terminal in such a manner that the three buttons are a first button, a second button and a third button from left to right, and the method includes the following steps.

In step S101, an event of successively triggering at least two buttons is detected and obtained.

In step S102, a current display mode is obtained.

In step S103, the display mode of a screen is switched according to a trigger manner of the event of successively triggering the at least two buttons and the current display mode. The display mode includes a full screen mode, a leftward scaling mode and a rightward scaling mode.

With the method provided by embodiments of the present disclosure, after the event of successively triggering the at least two buttons is detected, the display mode of the screen is switched according to the trigger manner of the event of successively triggering the at least two buttons and the current display mode. Since the display mode is switched according to different trigger manners of the terminal's own buttons and the current display mode, an operation complexity is reduced, a problem of a switching between different display modes is solved, and it is suitable for handedness of different users.

In another embodiment of the present disclosure, detecting and obtaining an event of successively triggering at least two buttons includes:
obtaining a monitor registered previously;
detecting and obtaining the event of successively triggering the at least two buttons based on the monitor.

In another embodiment of the present disclosure, detecting and obtaining the event of successively triggering the at least two buttons based on the monitor includes:
obtaining a first button parameter according to the monitor when it is detected that any button is triggered;
obtaining a button corresponding to the first button parameter according to a correspondence between button parameters and buttons;
starting a timer, when the button is the second button;
determining that the event of successively triggering the at least two buttons is obtained, if a second button parameter is obtained before a duration of the timer reaches a predetermined duration.

In another embodiment of the present disclosure, obtaining a first button parameter according to the monitor includes:
calling an onKeyEvent function in the timer, calling a keyEvent function and further calling a getKeyCode function when it is detected that any button is triggered;
obtaining the first button parameter according to the getKeyCode function.

In another embodiment of the present disclosure, obtaining a current display mode includes:
obtaining a current mode parameter;
obtaining the current display mode corresponding to the current mode parameter according to a correspondence between display modes and mode parameters.

In another embodiment of the present disclosure, obtaining the current display mode corresponding to the current mode parameter according to a correspondence between display modes and mode parameters includes:
obtaining the current display mode corresponding to a first parameter as the full screen mode according to the correspondence between display modes and mode parameters, when the mode parameter is the first parameter;
obtaining the current display mode corresponding to a second parameter as the leftward scaling mode according to the correspondence between display modes and mode parameters, when the mode parameter is the second parameter;
obtaining the current display mode corresponding to a third parameter as the rightward scaling mode according to the correspondence between display modes and mode parameters, when the mode parameter is the third parameter.

In another embodiment of the present disclosure, switching the display mode of a screen according to a trigger manner of the event of successively triggering the at least two buttons and the current display mode includes:
determining the trigger manner of the at least two buttons as a continuous tap mode according to the event of successively triggering the at least two buttons;
switching the display mode of the screen according to the continuous tap mode and the current display mode.
In another embodiment of the present disclosure, the continuous tap mode includes a continuous tap sliding to left and a continuous tap sliding to right;
determining the trigger manner of the at least two buttons as a continuous tap mode according to the event of successively triggering the at least two buttons includes:
   determining the trigger manner of the at least two buttons as the continuous tap sliding to left, when triggered buttons comprise at least the first button and the second button and a sliding path of a touch operation on the at least two buttons is towards left;
   determining the trigger manner of the at least two buttons as the continuous tap sliding to right, when the triggered buttons comprise at least the third button and the second button and the sliding path of the touch operation on the at least two buttons is towards right.

In another embodiment of the present disclosure, switching the display mode of the screen according to the continuous tap mode and the current display mode includes:
switching the full screen mode to the leftward scaling mode, when the continuous tap mode is the continuous tap sliding to left and the current display mode is the full screen mode;
switching the full screen mode to the rightward scaling mode, when the continuous tap mode is the continuous tap sliding to right and the current display mode is the full screen mode;
switching the leftward scaling mode to the full screen mode, when the continuous tap mode is the continuous tap sliding to left and the current display mode is the leftward scaling mode;
switching the leftward scaling mode to the rightward scaling mode or the full screen mode, when the continuous tap mode is the continuous tap sliding to right and the current display mode is the leftward scaling mode;
switching the rightward scaling mode to the leftward scaling mode or the full screen mode, when the continuous tap mode is the continuous tap sliding to left and the current display mode is the rightward scaling mode;
switching the rightward scaling mode to the full screen mode, when the continuous tap mode is the continuous tap sliding to right and the current display mode is the rightward scaling mode.

Alternative embodiments of the present disclosure may consist of any combination of above optional technical solutions, which are omitted herein.

Fig. 2 is a flow chart showing a method for switching a display mode according to an exemplary embodiment. Referring to Fig. 2, the method for switching a display mode is used in a mobile terminal and includes following steps.

In step S201, the mobile terminal detects and obtains an event of successively triggering at least two buttons.

In this embodiment, the mobile terminal may be a mobile phone, a desktop computer, a tablet personal computer having a touch screen, and so on. The mobile terminal at least has three buttons arranged in a lower portion of a display interface in such a manner that the three buttons are a first button, a second button and a third button from left to right. In the embodiment, the first button is a Menu button, and a menu option may be popped up when the first button is clicked; the second button is a Home button, and a home page may be returned to when the second button is clicked; the third button is a Back button, and a previous page or operation may be returned to when the third button is clicked.

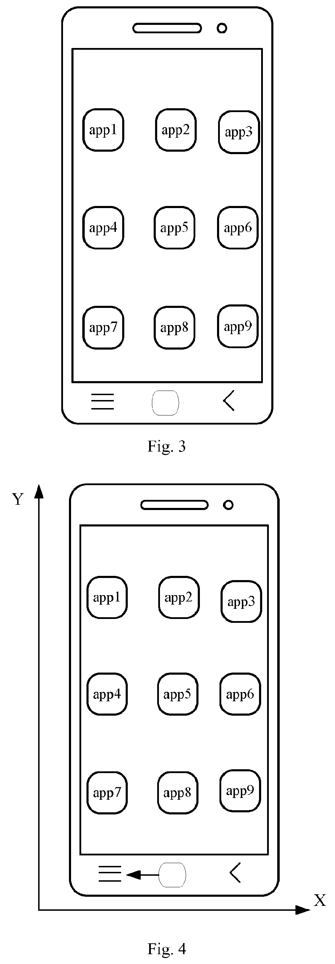

The buttons of the mobile terminal may be entity buttons or virtual buttons. When the buttons of the mobile terminal are the entity buttons, the three entity buttons will not disappear with a shutdown of the mobile terminal. As shown in Fig. 3, the first button is represented by a symbol " 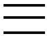 ", the second button is represented by a symbol " 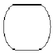 ", and the third button is represented by a symbol " 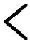 ". When the buttons of the mobile terminal are the virtual buttons, the three virtual buttons are in the lower portion of the display interface of the mobile terminal in a power-on state due to the gravity, and disappear with the shutdown of the mobile terminal. Alternatively, the virtual buttons may be hidden in a lower portion of a screen, and may be called out when the user triggers a predetermined operation upon intending to make an operation.

It should be noted that, although three buttons are illustrated in the above description, in which the first button is the Menu button, the second button is the Home button, the third button is the Back button, the mobile terminal may further include buttons having other functions except the above three buttons, such as a search button, a button having a networking function, a button having a playing function and so on, which are omitted herein. In actual applications, the mobile terminal may have four buttons, and the four buttons are arranged in the lower portion of the display interface of the mobile terminal in such a manner that the four buttons are a first button, a second button, a third button and a fourth button from left to right, in which the first button is the Menu button, the second button is the Home button, the third button is the Back button and the fourth button is the search button. A Search dialog box may be popped up when the search button is clicked, and related content can be found through the search dialog box.

In order to solve a problem that it is difficult for the user to operate the mobile terminal with large screen and to satisfy usage requirements of users having different handedness, in the embodiment, with the help of the mobile terminal's own buttons, the display mode is switched in different scenes. In order to provide the user with different display modes more accurately, in the embodiment, the display mode is determined according to a touch operation on at least two buttons in the mobile terminal. Before this, the mobile terminal needs to detect and obtain the event of successively triggering the at least two buttons.

The mobile terminal usually detects and obtains the event of successively triggering the at least two buttons in following manners.

First, the mobile terminal needs to obtain a monitor registered previously.

The monitor is a system having a monitoring function in the mobile terminal. In the embodiment, the monitor is mainly configured to monitor a trigger event in the mobile terminal. Further, the monitor includes a plurality of functions of different classes, such as a first-class function onKeyEvent, a second-class function KeyEvent under the first-class function onKeyEvent, a third-class function getKeyCode under the second-class function KeyEvent, and so on. The mobile terminal may register the monitor with a setInputFilter method in an InputManagerService process.

Then, the mobile terminal can obtain the monitor registered previously from the InputManagerService process directly.

Next, the mobile terminal may detect and obtain the event of successively triggering the at least two buttons based on the monitor.

In the embodiment, the monitor has a function of monitoring the trigger event in the mobile terminal. Based on the function of the monitor, when it is detected that any button is triggered, the mobile terminal may detect and obtain the event of successively triggering the at least two buttons by operating following steps (1) ~ (3).

(1) The mobile terminal calls the function onKeyEvent, further calls the function keyEvent under the function onKeyEvent, and finally calls the function getKeyCode under the function keyEvent, so that a first button parameter is obtained according to the function getKeyCode.

It should be noted that, in the embodiment, different button parameters correspond to different buttons, and the button parameters may be set by the user previously. For example, the button parameter of the Menu button may be set as 82, the button parameter of the Home button may be set as 3, the button parameter of the Back button may be set as 4. Once the button parameters are set, they will not change in subsequent operations. After the button parameters of different buttons are set, a correspondence between different buttons and button parameters is formed. In order to facilitate subsequent applications, in the embodiment, the correspondence between buttons and button parameters is stored in a storage cell such as a memory, a flash memory, and so on.

In addition, in the embodiment, the first button parameter and the second button parameter are not configured to imply values of the button parameters, but only to distinguish different button parameters. In practice, each of the first button parameter and the second button parameter may be any one of the above button parameters 3, 4 and 82. In a scene of touching the mobile terminal, the first button parameter represents a button parameter obtained in a first trigger event of the mobile terminal, and the second button parameter represents a button parameter obtained in a second trigger event of the mobile terminal.

(2) A button corresponding to the first button parameter is obtained according to the correspondence between button parameters and buttons. The mobile terminal starts a timer, when the button is the second button.

When the second button (for example, the Home button) is triggered in a first touch operation, the first touch operation is an effective operation. At this time, the mobile terminal starts the timer for timing.

(3) It is determined that the event of successively triggering the at least two buttons is obtained, if a second button parameter is obtained before the duration of the timer reaches a predetermined duration.

In the embodiment, the predetermined duration is configured to represent a longest reaction time between two touch operations monitored by the monitor. If no other button operation has been detected before the duration of the timer reaches the predetermined duration, an original logic of the second button is triggered and a corresponding operation is executed, and the obtained first button parameter is discarded. If another button operation is detected before the duration of the timer reaches the predetermined duration, a button parameter of the button operation is obtained using the method for obtaining the first button parameter, and if the button corresponding to the button parameter is obtained as the first button or the third button from the correspondence between buttons and button parameters, it is determined that the event of successively triggering the at least two buttons is obtained; if the button corresponding to the button parameter is obtained as the second button from the correspondence between buttons and button parameters, the original logic of the second button is executed.

Assume that the predetermined duration is set as 80 milliseconds, the button parameter of the Menu button is set as 82, the button parameter of the Home button is set as 3 and the button parameter of the Back button is set as 4. If no other button operation has been detected before the duration of the timer reaches 80 milliseconds, an logic of the Home button is triggered and the obtained first button parameter, i.e. 3, is discarded. If another button operation is detected before the duration of the timer reaches 80 milliseconds, and the button parameter of the button operation is obtained as 82, then the button corresponding to the button parameter is obtained as the Menu button from the correspondence between buttons and button parameters, and it is determined that the event of successively triggering the at least two buttons is obtained. If another button operation is detected before the duration of the timer reaches 80 milliseconds, and the button parameter of the button operation detected is obtained as 4, then the button corresponding to the button parameter is obtained as the Back button from the correspondence between buttons and button parameters, and it is determined that the event of successively triggering the at least two buttons is obtained. If another button operation is detected before the duration of the timer reaches 80 milliseconds, and the button parameter of the button operation is obtained as 3, then the button corresponding to the button parameter is obtained as the Home button from the correspondence between buttons and button parameters, and the original logic of the Home button is executed.

In step S202, the mobile terminal obtains a current display mode.

In the embodiment, the display mode includes a full screen mode, a leftward scaling mode and a rightward scaling mode. When the user triggers the mobile terminal to perform a mode switching operation, it implies that the current display mode of the screen cannot satisfy a requirement of the user, and it is required to switch the current display mode to a display mode satisfying the requirement of the user. Thus, the current display mode should be obtained before switching the display mode.

In order to identify different display modes, in the embodiment, different display modes correspond to different codes, for example, a code corresponding to the full screen mode is MODE_NONE, a code corresponding to the leftward scaling mode is MODE_LEFT, and a code corresponding to the rightward scaling mode is MODE_RIGHT. Furthermore, different display modes correspond to different mode parameters, for example, a mode parameter corresponding to the full screen mode is a first parameter, a mode parameter corresponding to the leftward scaling mode is a second parameter, and a mode parameter corresponding to the rightward scaling mode is a third parameter. In the embodiment, the first parameter is set as 0, the second parameter is set as 1, and the third parameter is set as 2. In addition, the terminal stores the mode parameter corresponding to the current display mode in the memory during the operation thereof. Thus, for obtaining the current display mode, the terminal may obtain the mode parameter representing the current display mode first, and then obtain the current display mode corresponding to the mode parameter from a correspondence between display modes and mode parameters.

In the embodiment, the current display mode may be obtained in any one of following obtaining ways.

First obtaining way: when the mode parameter is the first parameter, the current display mode corresponding to the first mode parameter is obtained as the full screen mode from the correspondence between display modes and mode parameters.

When the code representing the current display mode is obtained as "stactic final int MODE_NONE=0" from the memory, it indicates that the obtained mode parameter is the first parameter, and then it is determined that the current display mode is the full screen mode.

Second obtaining way: when the mode parameter is the second parameter, the current display mode corresponding to the second mode parameter is obtained as the leftward scaling mode from the correspondence between display modes and mode parameters.

When the code representing the display mode is obtained as "stactic final int MODE_LEFT=1" from the memory, it indicates that the obtained mode parameter is the second parameter, and then it is determined that the current display mode is the leftward scaling mode.

Third obtaining way: when the mode parameter is the third parameter, the current display mode corresponding to the third mode parameter is obtained as the rightward scaling mode from the correspondence between display modes and mode parameters.

When the code representing the current display mode is obtained as "stactic final int MODE_RIGHT=2" from the memory, it indicates that the obtained mode parameter is the third parameter, and then it is determined that the current display mode is the rightward scaling mode.

In step 203, the mobile terminal determines the trigger manner of the at least two buttons as a continuous tap mode according to the event of successively triggering the at least two buttons.

The continuous tap mode includes a continuous tap sliding to left and a continuous tap sliding to right. The mobile terminal may determine the trigger manner of the at least two buttons as the continuous tap mode according to the event of successively triggering the at least two buttons in following two ways, but the present disclosure is not limited to this.

First way: when triggered buttons include at least the first button and the second button and a sliding path of a touch operation on the at least two buttons is towards left, the trigger manner of the at least two buttons is determined as the continuous tap sliding to left.

A trigger event coordinate system as shown in Fig. 4 is established After it is detected that the first button and the second button are triggered, a first coordinate of a position where first button is and a second coordinate of a position where second button is are obtained, and a first vector is obtained based on the first coordinate and the second coordinate. If an included angle between a direction of the first vector and a positive X-axis is a obtuse angle or a right angle, the sliding path of the touch operation on the first button and the second button is determined to be towards left, and then the trigger manner of the at least two buttons is determined as the continuous tap sliding to left.

Second way: when the triggered buttons include at least the third button and the second button and the sliding path of the touch operation on the at least two buttons is towards right, the trigger manner of the at least two buttons is determined as the continuous tap sliding to right.

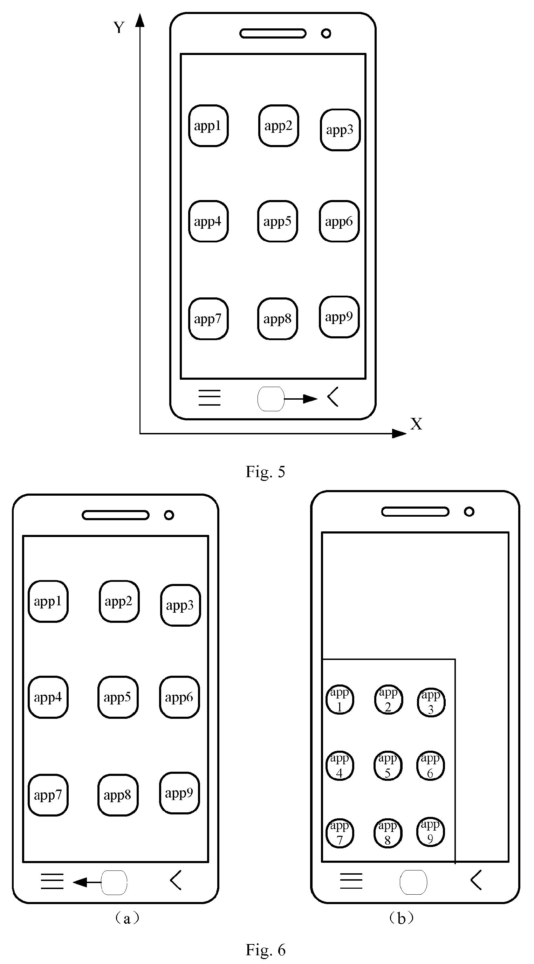

A trigger event coordinate system as shown in Fig. 5 is established. After it is detected that the third button and the second button are triggered, a third coordinate of a position where third button is and the second coordinate of the position where second button is are obtained, and a second vector is obtained based on the third coordinate and the second coordinate. If an included angle between a direction of the second vector and the positive X-axis is an acute angle, the sliding path of the touch operation on the third button and the second button is determined to be towards right, and then the trigger manner of the at least two buttons is determined as the continuous tap sliding to right.

It should be noted that, the above mobile terminal including three buttons is illustrated as an example. When the mobile terminal includes four buttons, a trigger manner of the four buttons may be determined according to the event of successively triggering the four buttons. Assume that the four buttons are arranged in the display interface of the mobile terminal in such a manner that the four buttons are a first button, a second button, a third button and a fourth button from left to right. When it is detected that the first button and the second button are triggered and the sliding path of the touch operation on the first button and the second button is towards left, the trigger manner of the first button and the second button is determined as the continuous tap sliding to left; when it is detected that the third button and the fourth button are triggered and the sliding path of the touch operation on the third button and the fourth button is towards right, the trigger manner of the third button and the fourth button is determined as the continuous tap sliding to right.

In step S204, the mobile terminal switches the display mode of the screen according to the continuous tap mode and the current display mode.

In the embodiment, both the trigger manner of the at least two buttons and the current display mode affect switching the display mode of the mobile terminal. In a comprehensive consideration of the continuous tap mode and the current display mode, switching the display mode of the screen includes, but is not limited to, following (1) ~ (6) implementations.

(1) When the continuous tap mode is the continuous tap sliding to left and the current display mode is the full screen mode, the full screen mode is switched to the leftward scaling mode.

When it is detected in the full screen mode that the continuous tap mode is the continuous tap sliding to left, it indicates that the user intends to operate the mobile terminal with his left hand. In order to satisfy the requirement of the user, the mobile terminal switches the full screen mode to the leftward scaling mode. Take switching the full screen mode to a lower-left corner scaling mode as an example, when it is detected in a scene of the full screen mode shown in Fig. 6(a) that the continuous tap mode is the continuous tap sliding to left, the mobile terminal switches the full screen mode in Fig. 6(a) to the lower-left corner scaling mode in Fig. 6(b).

(2) When the continuous tap mode is the continuous tap sliding to right and the current display mode is the full screen mode, the full screen mode is switched to the rightward scaling mode.

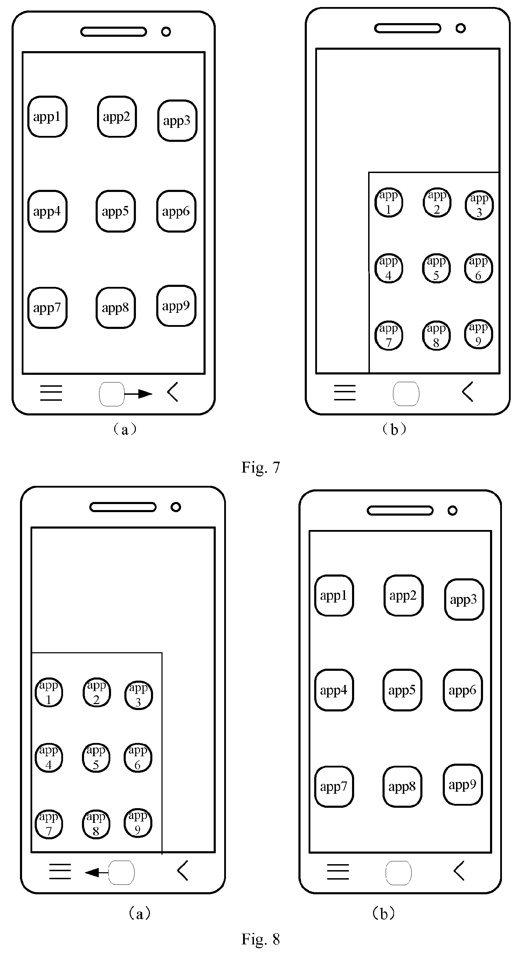

When it is detected in the full screen mode that the continuous tap mode is the continuous tap sliding to right, it indicates that the user intends to operate the mobile terminal with his right hand. In order to satisfy the requirement of the user, the mobile terminal switches the full screen mode to the rightward scaling mode. Take switching the full screen mode to a lower-right corner scaling mode as an example, when it is detected in a scene of the full screen mode shown in Fig. 7(a) that the continuous tap mode is the continuous tap sliding to right, the mobile terminal switches the full screen mode in Fig. 7(a) to the lower-right corner scaling mode in Fig. 7(b).

(3) When the continuous tap mode is the continuous tap sliding to left and the current display mode is the leftward scaling mode, the leftward scaling mode is switched to the full screen mode.

When it is detected in the leftward scaling mode that the continuous tap mode is the continuous tap sliding to left, the mobile terminal switches the leftward scaling mode to the full screen mode. Take the lower-left corner scaling mode as an example, when it is detected in a scene of the leftward scaling mode in Fig. 8 (a) that the continuous tap mode is the continuous tap sliding to left, the mobile terminal switches the leftward scaling mode in Fig. 8(a) to the full screen mode in Fig. 8(b).

(4) When the continuous tap mode is the continuous tap sliding to right and the current display mode is the leftward scaling mode, the leftward scaling mode is switched to the rightward scaling mode or the full screen mode.

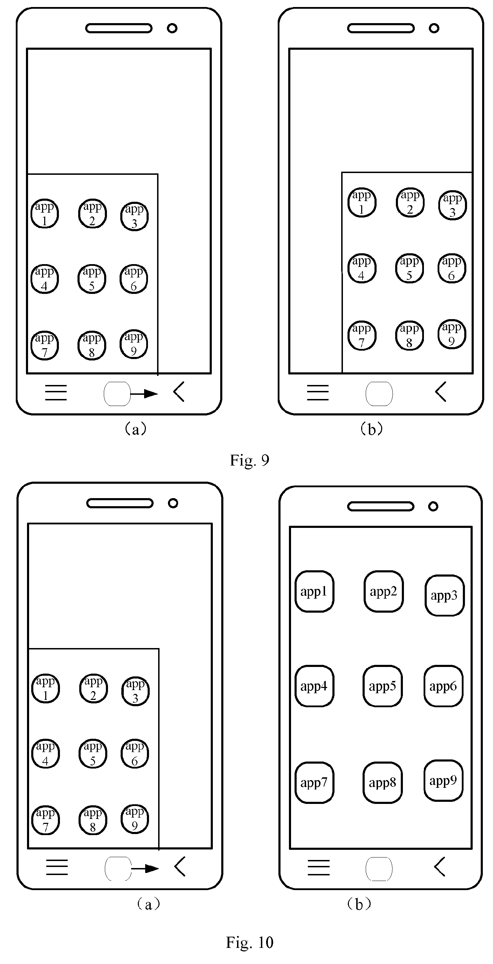

When it is detected in the leftward scaling mode that the continuous tap mode is the continuous tap sliding to right, the mobile terminal switches the leftward scaling mode to the rightward scaling mode or the full screen mode. It may be determined whether to switch to the rightward scaling mode or to the full screen mode in any one of following manners. When a trigger event is detected in a predetermined area of the current screen and an included angle between the sliding path of the trigger event and a positive direction of a longitudinal axis of the mobile terminal is greater than a predetermined angle value, the leftward scaling mode is switched to the rightward scaling mode. Alternatively, when a trigger event on the current screen is detected and an included angle between the sliding path of the trigger event and the positive direction of the longitudinal axis of the mobile terminal is greater than the predetermined angle value, the leftward scaling mode is switched to the rightward scaling mode. For instance, in an example in which the leftward scaling mode is the lower-left corner scaling mode, , when it is detected in a scene of the leftward scaling mode shown in Fig. 9(a) that the continuous tap mode is the continuous tap sliding to right and the included angle between the sliding path of the trigger event and the positive direction of the longitudinal axis of the mobile terminal is greater than the predetermined angle, the mobile terminal switches the leftward scaling mode in Fig. 9(a) to the rightward scaling mode in Fig. 9(b). When a trigger event is detected in a predetermined area on the current screen and the included angle between the sliding path of the trigger event and the positive direction of the longitudinal axis of the mobile terminal is less than the predetermined angle value, the leftward scaling mode is switched to the full screen mode. Alternatively, when the trigger event on the current screen is detected and the included angle between the sliding path of the trigger event and the positive direction of the longitudinal axis of the mobile terminal is less than the predetermined angle value, the leftward scaling mode is switched to the full screen mode. For instance, in an example in which the leftward scaling mode is the lower-left corner scaling mode, , when it is detected in a scene of the leftward scaling mode in Fig. 10(a) that the continuous tap mode is the continuous tap sliding to right and the included angle between the sliding path of the trigger event and the positive direction of the longitudinal axis of the mobile terminal is less than the predetermined angle, the mobile terminal switches the leftward scaling mode in Fig. 10(a) of to the full screen mode in Fig. 10(b).

(5) When the continuous tap mode is the continuous tap sliding to left and the current display mode is the rightward scaling mode, the rightward scaling mode is switched to the leftward scaling mode or the full screen mode.

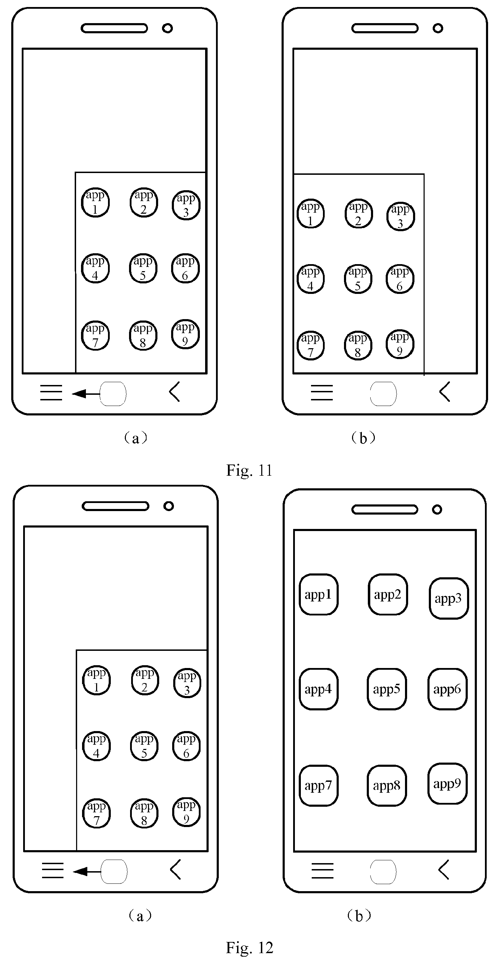

When it is detected in the rightward scaling mode that the continuous tap mode is the continuous tap sliding to left, the mobile terminal switches the rightward scaling mode to the leftward scaling mode or the full screen mode. Referring to the ways in (4), it may be determined whether to switch to which mode. For instance, in an example in which the rightward scaling mode is the lower-right corner scaling mode, when it is detected in a scene of the rightward scaling mode in Fig. 11(a) that the continuous tap mode is the continuous tap sliding to left and the included angle between the sliding path of the trigger event and the positive direction of the longitudinal axis of the mobile terminal is greater than the predetermined angle value, the mobile terminal switches the rightward scaling mode in Fig. 11(a) to the leftward scaling mode in Fig. 11(b); when it is detected in a scene of the rightward scaling mode in Fig. 12(a) that the continuous tap mode is the continuous tap sliding to left and the included angle between the sliding path of the trigger event and the positive direction of the longitudinal axis of the mobile terminal is less than the predetermined angle value, the mobile terminal switches the rightward scaling mode in Fig. 12(a) to the full screen mode in Fig. 12(b).

(6) When the continuous tap mode is the continuous tap sliding to right and the current display mode is the rightward scaling mode, the rightward scaling mode is switched to the full screen mode.

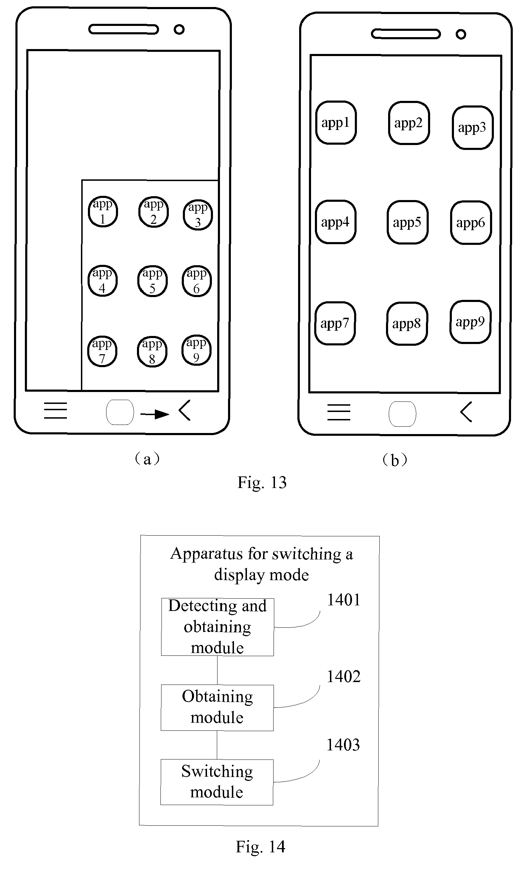

When it is detected in the rightward scaling mode that the continuous tap mode is the continuous tap sliding to right, the mobile terminal switches the rightward scaling mode to the full screen mode. In an example in which the rightward scaling mode is the lower-right corner scaling mode, when it is detected in a scene of the rightward scaling mode in Fig. 13(a) that the continuous tap mode is the continuous tap sliding to right, the mobile terminal switches the rightward scaling mode in Fig. 13(a) to the full screen mode in Fig. 13(b).

With the method provided by embodiments of the present disclosure, after the event of successively triggering the at least two buttons is detected, the display mode of the screen is switched according to the trigger manner of the event of successively triggering the at least two buttons and the current display mode. Since the display mode is switched according to different trigger manners of the terminal's own buttons and the current display mode, an operation complexity is reduced, a problem of a switching between different display modes is solved, and it is suitable for handedness of different users.

Fig. 14 is a block diagram illustrating an apparatus for switching a display mode according to an exemplary embodiment. The apparatus is used in a mobile terminal at least having three buttons arranged in a display interface of the mobile terminal in such a manner that the three buttons are a first button, a second button and a third button from left to right. With reference to Fig. 14, the apparatus includes: a detecting and obtaining module 1401, an obtaining module 1402 and a switching module 1403.

The detecting and obtaining module 1401 is configured to detect and obtain an event of successively triggering at least two buttons;

The obtaining module 1402 is configured to obtain a current display mode;

The switching module 1403 is configured to switch the display mode of a screen according to a trigger manner of the event of successively triggering the at least two buttons and the current display mode;

The display mode includes a full screen mode, a leftward scaling mode and a rightward scaling mode.

In another embodiment of the present disclosure, the detecting and obtaining module 1401 includes: an obtaining unit and a detecting and obtaining unit.

The obtaining unit is configured to obtain a monitor registered previously.

The detecting and obtaining unit is configured to detect and obtain the event of successively triggering the at least two buttons based on the monitor.

In another embodiment of the present disclosure, the detecting and obtaining unit includes: a first obtaining sub-unit, a second obtaining sub-unit, a starting sub-unit and a determining sub-unit.

The first obtaining sub-unit is configured to obtain a first button parameter according to the monitor when it is detected that any button is triggered.

The second obtaining sub-unit is configured to obtain a button corresponding to the first button parameter according to a correspondence between button parameters and buttons.

The starting sub-unit is configured to start a timer, when the button is the second button.

The determining sub-unit is configured to determine that the event of successively triggering the at least two buttons is obtained, if a second button parameter is obtained before a duration of the timer reaches a predetermined duration.

In another embodiment of the present disclosure, the first obtaining sub-unit is configured to call an onKeyEvent function in the timer, call a keyEvent function and further call a getKeyCode function when it is detected that any button is triggered, and to obtain the first button parameter according to the getKeyCode function.

In another embodiment of the present disclosure, the obtaining module 1402 is configured to obtain a current mode parameter and to obtain the current display mode corresponding to the current mode parameter according to a correspondence between display modes and mode parameters.

In another embodiment of the present disclosure, the obtaining module 1402 is configured to obtain the current display mode corresponding to a first parameter as the full screen mode according to the correspondence between display modes and mode parameters, when the mode parameter is the first parameter.

The obtaining module 1402 is configured to obtain the current display mode corresponding to a second parameter as the leftward scaling mode according to the correspondence between display modes and mode parameters, when the mode parameter is the second parameter.

The obtaining module 1402 is configured to obtain the current display mode corresponding to a third parameter as the rightward scaling mode according to the correspondence between display modes and mode parameters, when the mode parameter is the third parameter.

In another embodiment of the present disclosure, the switching module 1403 includes: a determining unit and a switching unit.

The determining unit is configured to determine the trigger manner of the at least two buttons as a continuous tap mode according to the event of successively triggering the at least two buttons.

The switching unit is configured to switch the display mode of the screen according to the continuous tap mode and the current display mode.

In another embodiment of the present disclosure, the continuous tap mode includes a continuous tap sliding to left and a continuous tap sliding to right.

The determining unit is configured to determine the trigger manner of the at least two buttons as the continuous tap sliding to left, when triggered buttons include at least the first button and the second button and a sliding path of a touch operation on the at least two buttons is towards left.

The determining unit is configured to determine the trigger manner of the at least two buttons as the continuous tap sliding to right, when the triggered buttons include at least the third button and the second button and the sliding path of the touch operation on the at least two buttons is towards right.

In another embodiment of the present disclosure, the switching unit is configured to switch the full screen mode to the leftward scaling mode, when the continuous tap mode is the continuous tap sliding to left and the current display mode is the full screen mode.

The switching unit is configured to switch the full screen mode to the rightward scaling mode, when the continuous tap mode is the continuous tap sliding to right and the current display mode is the full screen mode.

The switching unit is configured to switch the full screen mode to the rightward scaling mode, when the continuous tap mode is the continuous tap sliding to right and the current display mode is the full screen mode.

The switching unit is configured to switch the leftward scaling mode to the rightward scaling mode or the full screen mode, when the continuous tap mode is the continuous tap sliding to right and the current display mode is the leftward scaling mode.

The switching unit is configured to switch the rightward scaling mode to the leftward scaling mode or the full screen mode, when the continuous tap mode is the continuous tap sliding to left and the current display mode is the rightward scaling mode.

The switching unit is configured to switch the rightward scaling mode to the full screen mode, when the continuous tap mode is the continuous tap sliding to right and the current display mode is the rightward scaling mode.

With the apparatus provided by embodiments of the present disclosure, after the event of successively triggering the at least two buttons is detected, the display mode of the screen is switched according to the trigger manner of the event of successively triggering the at least two buttons and the current display mode. Since the display mode is switched according to different trigger manners of the terminal's own buttons and the current display mode, an operation complexity is reduced, a problem of a switching between different display modes is solved, and it is suitable for handedness of different users.

With respect to the apparatuses in the above embodiments, the specific manners for performing operations for individual modules therein have been described in detail in the embodiments regarding the methods for switching the display mode, which will not be elaborated herein.

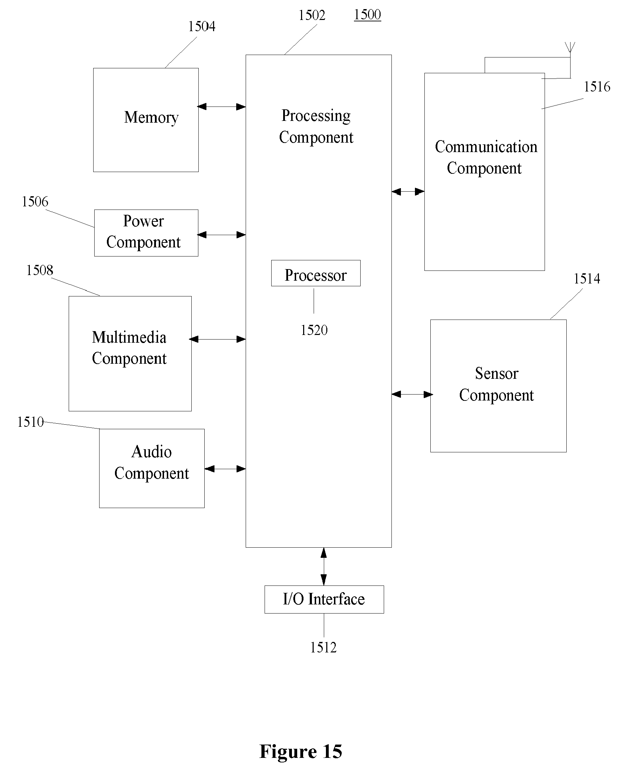

Fig. 15 is a schematic diagram of an apparatus 1500 for switching a display mode according to an exemplary embodiment. For example, the device 1500 may be a mobile phone, a computer, a digital broadcast terminal, a messaging device, a gaming console, a tablet, a medical device, an exercise equipment, a personal digital assistant, and the like.

Referring to Fig. 15, the apparatus 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the apparatus 1500, such as the operations associated with display, telephone calls, data communications, camera operations, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the apparatus 1500. Examples of such data include instructions for any applications or methods operated on the apparatus 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the apparatus 1500. The power component 1506 may include a power management system, one or more power sources, and any other components associated with the generation, management, and distribution of power in the apparatus 1500.

The multimedia component 1508 includes a screen providing an output interface between the apparatus 1500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1508 includes a front camera and/or a rear camera. The front camera and the rear camera may receive an external multimedia datum while the apparatus 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 includes a microphone (MIC) configured to receive an external audio signal when the apparatus 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the apparatus 1500. For instance, the sensor component 1514 may detect an open/closed status of the apparatus 1500, relative positioning of components, e.g., the display and the keypad, of the apparatus 1500, a change in position of the apparatus 1500 or a component of the apparatus 1500, a presence or absence of user contact with the apparatus 1500, an orientation or an acceleration/deceleration of the apparatus 1500, and a change in temperature of the apparatus 1500. The sensor component 1514 may include a proximity sensor configured to detect the presence of nearby objects without any physical contact. The sensor component 1514 may also include a light sensor, such as a CMOS or CCD image sensor, for use in imaging applications. In some embodiments, the sensor component 1514 may also include an accelerometer sensor, a gyroscope sensor, a magnetic sensor, a pressure sensor, or a temperature sensor.

The communication component 1516 is configured to facilitate communication, wired or wirelessly, between the apparatus 1500 and other devices. The apparatus 1500 can access a wireless network based on a communication standard, such as WiFi, 2G or 3G, or a combination thereof. In one exemplary embodiment, the communication component 1516 receives a broadcast signal or broadcast associated information from an external broadcast management system via a broadcast channel. In one exemplary embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1504, executable by the processor 1520 in the apparatus 1500, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium is provided. Instructions stored in the storage medium, when executed by a processor of an mobile terminal, causes the mobile terminal to perform a method for switching a display mode, in which the method is used in the mobile terminal at least having three buttons arranged in the display interface of the mobile terminal in such a manner that the three buttons are a first button, a second button and a third button from left to right, and the method includes:
detecting and obtaining an event of successively triggering at least two buttons;
obtaining a current display mode;
switching the display mode of a screen according to a trigger manner of the event of successively triggering the at least two buttons and the current display mode;
in which the display mode includes a full screen mode, a leftward scaling mode and a rightward scaling mode.

In another embodiment of the present disclosure, detecting and obtaining an event of successively triggering at least two buttons includes:
obtaining a monitor registered previously;
detecting and obtaining the event of successively triggering the at least two buttons based on the monitor.

In another embodiment of the present disclosure, detecting and obtaining the event of successively triggering the at least two buttons based on the monitor includes:
obtaining a first button parameter according to the monitor when it is detected that any button is triggered;
obtaining a button corresponding to the first button parameter according to a correspondence between button parameters and buttons;
starting a timer, when the button is the second button;
determining that the event of successively triggering the at least two buttons is obtained, if a second button parameter is obtained before a duration of the timer reaches a predetermined duration.

In another embodiment of the present disclosure, obtaining a first button parameter according to the monitor includes:
calling an onKeyEvent function in the timer, calling a keyEvent function and further calling a getKeyCode function when it is detected that any button is triggered;
obtaining the first button parameter according to the getKeyCode function.

In another embodiment of the present disclosure, obtaining a current display mode includes:
obtaining a current mode parameter;
obtaining the current display mode corresponding to the current mode parameter according to a correspondence between display modes and mode parameters.

In another embodiment of the present disclosure, obtaining the current display mode corresponding to the current mode parameter according to a correspondence between display modes and mode parameters includes:
obtaining the current display mode corresponding to a first parameter as the full screen mode according to the correspondence between display modes and mode parameters, when the mode parameter is the first parameter;
obtaining the current display mode corresponding to a second parameter as the leftward scaling mode according to the correspondence between display modes and mode parameters, when the mode parameter is the second parameter;
obtaining the current display mode corresponding to a third parameter as the rightward scaling mode according to the correspondence between display modes and mode parameters, when the mode parameter is the third parameter.

In another embodiment of the present disclosure, switching the display mode of a screen according to a trigger manner of the event of successively triggering the at least two buttons and the current display mode includes:
determining the trigger manner of the at least two buttons as a continuous tap mode according to the event of successively triggering the at least two buttons;
switching the display mode of the screen according to the continuous tap mode and the current display mode.

In another embodiment of the present disclosure, the continuous tap mode includes a continuous tap sliding to left and a continuous tap sliding to right;
determining the trigger manner of the at least two buttons as a continuous tap mode according to the event of successively triggering the at least two buttons includes:
determining the trigger manner of the at least two buttons as the continuous tap sliding to left, when triggered buttons comprise at least the first button and the second button and a sliding path of a touch operation on the at least two buttons is towards left;
determining the trigger manner of the at least two buttons as the continuous tap sliding to right, when the triggered buttons comprise at least the third button and the second button and the sliding path of the touch operation on the at least two buttons is towards right.

In another embodiment of the present disclosure, switching the display mode of the screen according to the continuous tap mode and the current display mode includes:
switching the full screen mode to the leftward scaling mode, when the continuous tap mode is the continuous tap sliding to left and the current display mode is the full screen mode;
switching the full screen mode to the rightward scaling mode, when the continuous tap mode is the continuous tap sliding to right and the current display mode is the full screen mode;
switching the leftward scaling mode to the full screen mode, when the continuous tap mode is the continuous tap sliding to left and the current display mode is the leftward scaling mode;
switching the leftward scaling mode to the rightward scaling mode or the full screen mode, when the continuous tap mode is the continuous tap sliding to right and the current display mode is the leftward scaling mode;
switching the rightward scaling mode to the leftward scaling mode or the full screen mode, when the continuous tap mode is the continuous tap sliding to left and the current display mode is the rightward scaling mode;
switching the rightward scaling mode to the full screen mode, when the continuous tap mode is the continuous tap sliding to right and the current display mode is the rightward scaling mode.

With the non-transitory computer readable storage medium provided by embodiments of the present disclosure, after the event of successively triggering the at least two buttons is detected, the display mode of the screen is switched according to the trigger manner of the event of successively triggering the at least two buttons and the current display mode. Since the display mode is switched according to different trigger manners of the terminal's own buttons and the current display mode, an operation complexity is reduced, a problem of a switching between different display modes is solved, and it is suitable for handedness of different users.

Other embodiments of the invention will be apparent to those skilled in the art from consideration of the specification and practice of the invention disclosed here.

## Claims

1. A method for switching a display mode, wherein the method is used in a mobile terminal at least having three buttons arranged in a display interface of the mobile terminal in such a manner that the three buttons are a first button, a second button and a third button from left to right, and the method comprises:
detecting and obtaining an event of successively triggering at least two buttons;
obtaining a current display mode;
switching the display mode of a screen according to a trigger manner of the event of successively triggering the at least two buttons, and the current display mode;
wherein the display mode comprises a full screen mode, a leftward scaling mode and a rightward scaling mode.

2. The method according to claim 1, wherein detecting and obtaining an event of successively triggering at least two buttons comprises:
obtaining a monitor registered previously;
detecting and obtaining the event of successively triggering the at least two buttons based on the monitor.

3. The method according to claim 2, wherein detecting and obtaining the event of successively triggering the at least two buttons based on the monitor comprises:
obtaining a first button parameter according to the monitor when it is detected that any button is triggered;
obtaining a button corresponding to the first button parameter according to a correspondence between button parameters and buttons;
starting a timer, when the button is the second button;
determining that the event of successively triggering the at least two buttons is obtained, if a second button parameter is obtained before a duration of the timer reaches a predetermined duration.

4. The method according to claim 3, wherein obtaining a first button parameter according to the monitor comprises:
calling an onKeyEvent function in the timer, calling a keyEvent function and further calling a getKeyCode function when it is detected that any button is triggered;
obtaining the first button parameter according to the getKeyCode function.

5. The method according to any of claims 1 to 4, wherein obtaining a current display mode comprises:
obtaining a current mode parameter;
obtaining the current display mode corresponding to the current mode parameter according to a correspondence between display modes and mode parameters.

6. The method according to claim 5, wherein obtaining the current display mode corresponding to the current mode parameter according to a correspondence between display modes and mode parameters comprises:
obtaining the current display mode corresponding to a first parameter as the full screen mode according to the correspondence between display modes and mode parameters, when the mode parameter is the first parameter;
obtaining the current display mode corresponding to a second parameter as the leftward scaling mode according to the correspondence between display modes and mode parameters, when the mode parameter is the second parameter;
obtaining the current display mode corresponding to a third parameter as the rightward scaling mode according to the correspondence between display modes and mode parameters, when the mode parameter is the third parameter.

7. The method according to any of claims 1 to 6, wherein switching the display mode of a screen according to a trigger manner of the event of successively triggering the at least two buttons and the current display mode comprises:
determining the trigger manner of the at least two buttons as a continuous tap mode according to the event of successively triggering the at least two buttons;
switching the display mode of the screen according to the continuous tap mode and the current display mode.

8. The method according to claim 7, wherein the continuous tap mode comprises a continuous tap sliding to left and a continuous tap sliding to right;
determining the trigger manner of the at least two buttons as a continuous tap mode according to the event of successively triggering the at least two buttons comprises:
determining the trigger manner of the at least two buttons as the continuous tap sliding to left, when triggered buttons comprise at least the first button and the second button and a sliding path of a touch operation on the at least two buttons is towards left;
determining the trigger manner of the at least two buttons as the continuous tap sliding to right, when the triggered buttons comprise at least the third button and the second button and the sliding path of the touch operation on the at least two buttons is towards right.

9. The method according to claim 8, wherein switching the display mode of the screen according to the continuous tap mode and the current display mode comprises:
switching the full screen mode to the leftward scaling mode, when the continuous tap mode is the continuous tap sliding to left and the current display mode is the full screen mode;
switching the full screen mode to the rightward scaling mode, when the continuous tap mode is the continuous tap sliding to right and the current display mode is the full screen mode;
switching the leftward scaling mode to the full screen mode, when the continuous tap mode is the continuous tap sliding to left and the current display mode is the leftward scaling mode;
switching the leftward scaling mode to the rightward scaling mode or the full screen mode, when the continuous tap mode is the continuous tap sliding to right and the current display mode is the leftward scaling mode;
switching the rightward scaling mode to the leftward scaling mode or the full screen mode, when the continuous tap mode is the continuous tap sliding to left and the current display mode is the rightward scaling mode;
switching the rightward scaling mode to the full screen mode, when the continuous tap mode is the continuous tap sliding to right and the current display mode is the rightward scaling mode.

10. An apparatus for switching a display mode, wherein the apparatus is used in a mobile terminal at least having three buttons arranged in a display interface of the mobile terminal in such a manner that the three buttons are a first button, a second button and a third button from left to right, and the apparatus comprises:
a detecting and obtaining module (1401) configured to detect and obtain an event of successively triggering at least two buttons;
an obtaining module (1402) configured to obtain a current display mode;
a switching module (1403) configured to switch the display mode of a screen according to a trigger manner of the event of successively triggering the at least two buttons and the current display mode;
wherein the display mode comprises a full screen mode, a leftward scaling mode and a rightward scaling mode.

11. The apparatus according to claim 10, wherein the detecting and obtaining module (1401) comprises:
an obtaining unit configured to obtain a monitor registered previously;
a detecting and obtaining unit configured to detect and obtain the event of successively triggering the at least two buttons based on the monitor.

12. The apparatus according to claim 11, wherein the detecting and obtaining unit (1401) comprises:
a first obtaining sub-unit configured to obtain a first button parameter according to the monitor when it is detected that any button is triggered;
a second obtaining sub-unit configured to obtain a button corresponding to the first button parameter according to a correspondence between button parameters and buttons;
a starting sub-unit configured to start a timer, when the button is the second button;
a determining sub-unit configured to determine that the event of successively triggering the at least two buttons is obtained, if a second button parameter is obtained before a duration of the timer reaches a predetermined duration.

13. The apparatus according to claim 12, wherein the first obtaining sub-unit is configured to call an onKeyEvent function in the timer, call a keyEvent function and further call a getKeyCode function when it is detected that any button is triggered;
obtain the first button parameter according to the getKeyCode function.

14. An apparatus for switching a display mode, wherein the apparatus is used in a mobile terminal at least having three buttons arranged in a display interface of the mobile terminal in such a manner that the three buttons are a first button, a second button and a third button from left to right, and the apparatus comprises:
a processor;
a memory configured to store instructions executable by the processor;
wherein the processor is configured to:
perform the method of any of claims 1 to 9.

15. A computer program which when executed on a mobile terminal causes it to carry out the method of any of claims 1 to 9.
